# EUROPÄISCHE PATENTSCHRIFT

(11) **EP 3 906 573 B1**
(45) Veröffentlichungstag und Bekanntmachung des Hinweises auf die Patenterteilung: **08.02.2023**
(21) Anmeldenummer: 19835658.6
(22) Anmeldetag: 20.12.2019
(51) Int. Cl.: H01G 11/08, H01G 11/10, H01G 11/14, H01G 11/18, H01M 10/625, B60L 58/18, H02J 7/02, B60L 1/00, B60L 1/02, B60L 58/14, B60L 58/20, B60L 58/27, H01M 10/42, H01M 10/63, H01M 10/6571, H01M 10/66, H02J 1/08, H02J 7/34

(54) **ELEKTROFAHRZEUG, INSBESONDERE BAUMASCHINE, UND VERFAHREN ZUM BETRIEB EINES ELEKTROFAHRZEUGS**
ELECTRIC VEHICLE, ESPECIALLY CONSTRUCTION MACHINE, AND METHOD FOR OPERATING IT
VÉHICULE ÉLECTRIQUE, EN PARTICULIER MACHINE DE CONSTRUCTION, ET SON PROCÉDÉ DE FONCTIONNEMENT

(30) Priorität: 04.01.2019 DE 102019200034
(43) Veröffentlichungstag der Anmeldung: 10.11.2021
(73) Patentinhaber: Robert Bosch GmbH, 70442 Stuttgart (DE)
(72) Erfinder: WOLL, Christoph, 70839 Gerlingen (DE); STEKER, Nils, 71229 Leonberg (DE); NEYER, Daniel, 70195 Stuttgart (DE)
(86) Internationale Anmeldenummer: PCT/EP2019/086709
(87) Internationale Veröffentlichungsnummer: WO 2020/141114

(56) Entgegenhaltungen:
- DE-A1-102010 041 014
- DE-A1-102011 087 028
- DE-A1-102017 204 065
- DE-A1-102017 210 747
- US-A1- 2015 044 520
- US-A1- 2015 104 682
- US-A1- 2016 023 559
- US-A1- 2016 152 151
- US-A1- 2017 267 105

## Beschreibung

Die Erfindung betrifft ein Elektrofahrzeug, insbesondere eine Baumaschine, welche ein Batteriesystem umfasst, welches eine Hochenergiebatterie mit mindestens einer Hochenergiezelle und eine Hochleistungsbatterie mit mindestens einer Hochleistungszelle aufweist. Die Erfindung betrifft auch ein Verfahren zum Betrieb eines erfindungsgemäßen Elektrofahrzeugs.

### Stand der Technik

Es zeichnet sich ab, dass in Zukunft vermehrt elektrisch angetriebene Kraftfahrzeuge, insbesondere auch Baumaschinen, wie beispielsweise Bagger, zum Einsatz kommen werden. In solchen Elektrofahrzeugen werden aufladbare Batteriesysteme eingesetzt, vorwiegend um elektrische Antriebseinrichtungen mit elektrischer Energie zu versorgen. Derartige Baumaschinen weisen in der Regel Batteriesysteme auf, welche über eine erhöhte Spannung sowie über eine erhöhte Kapazität zur Speicherung einer höheren Menge an elektrischer Energie im Vergleich zu Batteriesystemen für Personenkraftwagen verfügen.

Es sind Hochenergiebatterien bekannt, welche eine verhältnismäßig große Speicherkapazität aufweisen und somit eine verhältnismäßig große Energiemenge speichern können. Hochenergiebatterien weisen Hochenergiezellen, beispielsweise in Form von Lithium-Ionen-Batteriezellen auf. Lithium-Ionen-Batteriezellen zeichnen sich unter anderem durch hohe Energiedichten, thermische Stabilität und eine äußerst geringe Selbstentladung aus. Lithium-lonen-Batteriezellen sind erst bei einer Temperatur, welche über einem Grenzwert von beispielsweise 5 °C liegt, optimal betreibbar.

Ferner sind Hochleistungsbatterien bekannt, welche eine verhältnismäßig große Leistung, beispielsweise in Form eines hohen Stromes, abgeben können. Hochleistungsbatterien weisen Hochleistungszellen, beispielsweise in Form von

Kondensatoren, Superkondensatoren oder hybride Superkondensatoren auf.

Hochleistungszellen sind auch bei tiefen Temperaturen betreibbar. Hochleistungszellen weisen, im Vergleich zu Hochenergiezellen, geringere Energiedichten auf.

US 2016/152151 A1 offenbart ein Elektrofahrzeug umfassend ein Batteriesystem, welches eine Hochenergiebatterie mit mindestens einer Hochenergiezelle aufweist, einen Verbraucherstrang, welcher mindestens einen Motor zum Antrieb des Elektrofahrzeugs aufweist.

Aus dem Dokument US 2017/267105 A1 ist ein Spannungsversorgungssystem für einen Elektromotor eines Elektrofahrzeugs bekannt. Das System umfasst dabei eine Reihe von Superkondensatoren und eine Anzahl von Lithium-Ionen-Batterien. Ferner ist ein Wechselschalter vorgesehen, mittels welchem entweder die Superkondensatoren oder die Lithium-Ionen-Batterien mit Verbrauchern verbunden werden können.

Das Dokument DE 10 2014 008 516 A1 offenbart ein Bordnetz für ein Kraftfahrzeug, insbesondere für ein Nutzfahrzeug. Dabei sind ein erstes Teilnetz mit einem ersten Energiespeicher und ein zweites Teilnetz mit einem zweiten Energiespeicher vorgesehen. Das erste Teilnetz und das zweite Teilnetz sind dabei miteinander koppelbar.

Insbesondere bei einer Baumaschine, wie beispielsweise einem Bagger, ist sicherzustellen, dass das Batteriesystem während des Arbeitens nur so weit entladen wird, dass die verbleibende Energie noch ausreicht, um die Baumaschine zu einer Ladestation zu bewegen.

### Offenbarung der Erfindung

Es wird ein Elektrofahrzeug, insbesondere eine Baumaschine wie beispielsweise ein Bagger, vorgeschlagen. Das Elektrofahrzeug umfasst ein Batteriesystem, welches eine Hochenergiebatterie mit mindestens einer Hochenergiezelle, vorzugsweise mit mehreren Hochenergiezellen, und eine Hochleistungsbatterie mit mindestens einer Hochleistungszelle, vorzugsweise mit mehreren Hochleistungszellen, aufweist.

Die Hochenergiezellen sind innerhalb der Hochenergiebatterie seriell und/oder parallel miteinander verschaltet. Die Hochenergiebatterie weist eine Ausgangsspannung im Bereich von beispielsweise 400 V bis 800 V auf. Die Hochleistungszellen sind innerhalb der Hochleistungsbatterie seriell und/oder parallel miteinander verschaltet. Die Hochleistungsbatterie weist ebenfalls eine Ausgangsspannung im Bereich von beispielsweise 400 V bis 800 V auf.

Das Elektrofahrzeug umfasst einen ersten Verbraucherstrang, welcher mindestens einen Stellmotor zum Antrieb mindestens eines Stellelements des Elektrofahrzeugs aufweist. Bei dem Stellelement kann es sich beispielsweise um einen Ausleger der Baumaschine handeln, welcher von dem Stellmotor über ein Getriebe angetrieben wird. Bei dem Stellelement kann es sich beispielsweise auch um eine Hydraulikpumpe zur Einstellung eines erforderlichen Betriebsdrucks in einem hydraulischen System der Baumaschine handeln. Das hydraulische System dient beispielsweise zum Bewegen des Auslegers.

Das Elektrofahrzeug umfasst auch einen zweiten Verbraucherstrang, welcher mindestens einen Traktionsmotor zum Antrieb mindestens eines Traktionselements des Elektrofahrzeugs aufweist. Bei dem mindestens einen Traktionselement kann es sich beispielsweise um ein Kettenlaufwerk zur Fortbewegung der Baumaschine handeln. Es können aber beispielsweise auch mehrere Laufräder zur Fortbewegung der Baumaschine als Traktionselemente vorgesehen sein.

Das Elektrofahrzeug umfasst ferner eine Schalteinheit, welche derart ansteuerbar ist, dass die Hochleistungsbatterie mit dem zweiten Verbraucherstrang elektrisch verbunden ist, sowie dass die Hochleistungsbatterie mit dem ersten Verbraucherstrang elektrisch verbunden ist, sowie dass die Hochenergiebatterie mit dem ersten Verbraucherstrang elektrisch verbunden ist.

Der erste Verbraucherstrang, welcher mindestens einen Stellmotor zum Antrieb mindestens eines Stellelements des Elektrofahrzeugs aufweist, kann also, je nach Einstellung der Schalteinheit, wahlweise von der Hochleistungsbatterie oder von der Hochenergiebatterie mit elektrischer Energie versorgt werden. Die Hochleistungsbatterie kann, je nach Einstellung der Schalteinheit, den ersten Verbraucherstrang sowie den zweiten Verbraucherstrang mit elektrischer Energie versorgen. Eine Versorgung des zweiten Verbraucherstrangs mit elektrischer Energie von der Hochenergiebatterie ist nicht vorgesehen.

Gemäß einer vorteilhaften Ausgestaltung der Erfindung ist die mindestens eine Hochenergiezelle der Hochenergiebatterie als Lithium-Ionen-Batteriezelle ausgeführt. Die Hochenergiezellen weisen somit eine verhältnismäßig große Speicherkapazität auf und können somit eine verhältnismäßig große Energiemenge speichern.

Gemäß einer vorteilhaften Ausgestaltung der Erfindung ist die mindestens eine Hochleistungszelle der Hochleistungsbatterie als Superkondensator oder als hybrider Superkondensator ausgeführt. Die mindestens eine Hochleistungszelle kann somit eine verhältnismäßig große Leistung, insbesondere in Form eines hohen Stromes, abgeben.

Gemäß einer bevorzugten Ausgestaltung der Erfindung sind die Hochenergiebatterie und die Hochleistungsbatterie derart angeordnet, dass Wärme, die bei einem Betrieb der Hochleistungsbatterie entsteht, zu der Hochenergiebatterie übertragbar ist. Beispielsweise ist ein Flüssigkeitskreislauf vorgesehen, in welchem ein flüssiges Kühlmittel strömt. Das Kühlmittel nimmt die Wärme auf, die von den Hochleistungszellen im Betrieb erzeugt wird, und gibt diese Wärme an die Hochenergiezellen ab. Vorzugsweise sind die Hochleistungszellen und die Hochenergiezellen auch in einem gemeinsamen Gehäuse angeordnet.

Gemäß einer bevorzugten Weiterbildung der Erfindung ist mindestens ein Heizwiderstand zum Beheizen der Hochenergiebatterie vorgesehen. Der Heizwiderstand ist dabei von der Hochleistungsbatterie ansteuerbar. Die Hochleistungszellen können somit elektrische Energie zum Beheizen der Hochenergiezellen liefern.

Es wird auch ein Verfahren zum Betrieb eines erfindungsgemäßen Elektrofahrzeugs, insbesondere einer Baumaschine wie beispielsweise einem Bagger, vorgeschlagen. Verfahrensgemäß wird dabei die Hochenergiebatterie von dem ersten Verbraucherstrang elektrisch getrennt, solange eine Temperatur der Hochenergiebatterie einen vorgegebenen Grenzwert unterschreitet. Dieser Grenzwert entspricht einer Temperatur von beispielsweise 5 °C, ab welcher die Hochenergiezellen optimal betreibbar sind.

Die Hochenergiezellen liefern also keine elektrische Energie an den ersten Verbraucherstrang, so lange die Temperatur der Hochenergiezellen unterhalb des vorgegebenen Grenzwerts liegt. Die Hochenergiebatterie ist dabei auch von dem zweiten Verbraucherstrang elektrisch getrennt. Die Hochenergiezellen liefern also auch keine elektrische Energie an den zweiten Verbraucherstrang. Vorzugsweise ist die Hochenergiebatterie von allen Verbrauchern elektrisch getrennt, so lange die Temperatur der Hochenergiezellen unterhalb des vorgegebenen Grenzwerts liegt.

Beim Starten des Elektrofahrzeugs, insbesondere einer Baumaschine, bei tiefen Temperaturen wird also zunächst nur die Hochleistungsbatterie mit dem zweiten Verbraucherstrang elektrisch verbunden, und die Hochleistungszellen liefern elektrische Energie an den mindestens einen Traktionsmotor zum Antrieb des mindestens einen Traktionselements des Elektrofahrzeugs. Das Elektrofahrzeug kann nun mit der Energie aus der Hochleistungsbatterie zu einer Arbeitsstelle fahren. Dabei erwärmen sich die Hochleistungszellen und übertragen die entstehende Wärme, beispielsweise über einen Flüssigkeitskreislauf, in welchem ein flüssiges Kühlmittel strömt, an die Hochenergiezellen. Auf diese Weise werden die Hochenergiezellen erwärmt.

Die Hochenergiebatterie kann mit dem ersten Verbraucherstrang elektrisch verbunden werden, sobald die Temperatur der Hochenergiebatterie den vorgegebenen Grenzwert überschreitet. Danach können die Hochenergiezellen elektrische Energie an den mindestens einen Stellmotor zum Antrieb mindestens eines Stellelements des Elektrofahrzeugs liefern. Das Elektrofahrzeug, beispielsweise eine Baumaschine, kann nun mit der elektrischen Energie aus der Hochenergiebatterie eine Arbeit ausführen.

Gemäß einer bevorzugten Ausgestaltung der Erfindung wird die Hochleistungsbatterie mit dem ersten Verbraucherstrang elektrisch verbunden, solange die Temperatur der Hochenergiebatterie den vorgegebenen Grenzwert unterschreitet. Das Elektrofahrzeug, beispielsweise eine Baumaschine, kann nun mit der elektrischen Energie aus den Hochleistungszellen eine Arbeit ausführen, solange die Temperatur der Hochenergiebatterie den vorgegebenen Grenzwert noch unterschreitet. Dabei erwärmen sich die Hochleistungszellen weiter und übertragen weiter die entstehende Wärme, beispielsweise über einen Flüssigkeitskreislauf, in welchem ein flüssiges Kühlmittel strömt, an die Hochenergiezellen. Auf diese Weise werden die Hochenergiezellen weiter erwärmt.

Gemäß einer bevorzugten Weiterbildung der Erfindung wird die Hochenergiebatterie mittels mindestens eines Heizwiderstands beheizt, solange die Temperatur der Hochenergiebatterie den vorgegebenen Grenzwert unterschreitet. Der Heizwiderstand wird dabei von der Hochleistungsbatterie angesteuert. Die Hochleistungszellen liefern somit elektrische Energie zum Beheizen der Hochenergiezellen. Auf diese Art wird die Erwärmung der Hochenergiebatterie beschleunigt, und die Hochenergiebatterie kann schneller mit dem ersten Verbraucherstrang elektrisch verbunden werden.

Gemäß einer vorteilhaften Ausgestaltung der Erfindung wird die Hochenergiebatterie von dem ersten Verbraucherstrang elektrisch getrennt, wenn ein Ladezustand der Hochenergiebatterie einen vorgegebenen Schwellenwert unterschreitet. Wenn die Hochenergiezellen weitgehend entladen sind, so können die Hochenergiezellen keine elektrische Energie mehr an den mindestens einen Stellmotor zum Antrieb mindestens eines Stellelements des Elektrofahrzeugs liefern und werden daher von dem ersten Verbraucherstrang elektrisch getrennt. Die Hochleistungszellen wurden nicht oder nur zu einem geringen Anteil entladen, so dass die Hochleistungszellen noch genügend elektrische Energie aufweisen, um das Elektrofahrzeug zu einer Ladestation zu bewegen.

Vorteilhaft wird die Hochleistungsbatterie mit dem ersten Verbraucherstrang elektrisch verbunden, wenn der Ladezustand der Hochenergiebatterie den vorgegebenen Schwellenwert unterschreitet. Das Elektrofahrzeug, beispielsweise eine Baumaschine, kann nun mit der elektrischen Energie aus der Hochleistungsbatterie die Arbeit ausführen. Die Hochleistungsbatterie wird jedoch nur dann mit dem ersten Verbraucherstrang elektrisch verbunden, wenn ein Ladezustand der Hochleistungsbatterie noch ausreicht, um das Elektrofahrzeug zu einer Ladestation zu bewegen.

### Vorteile der Erfindung

Mit einem erfindungsgemäßen Elektrofahrzeug, insbesondere einer Baumaschine wie beispielsweise einem Bagger, ist auch ein Arbeiten bei tiefen Temperaturen ermöglicht. Insbesondere ist ein Start des Elektrofahrzeugs auch bei Minustemperaturen möglich. Beim Starten des Elektrofahrzeugs wird zunächst nur die Hochleistungsbatterie zugeschaltet, und das Elektrofahrzeug kann nun mit der Energie aus der Hochleistungsbatterie zu einer Arbeitsstelle fahren. Dabei erwärmen sich die Hochleistungszellen und übertragen die entstehende Wärme an die Hochenergiezellen, welche dadurch erwärmt werden. Auch die Hochenergiezellen werden somit verhältnismäßig schnell aufgewärmt, und damit entfallen lange Wartezeiten bis zum Arbeitsbeginn. Auch kann die beim Fahren des Elektrofahrzeugs anfallende Rekuperationsenergie in die Hochleistungsbatterie eingespeist werden und ist somit vollständig nutzbar. Dadurch wird die Reichweite des Elektrofahrzeugs erhöht und die mögliche Arbeitsdauer verlängert. Ein Liegenbleiben des Elektrofahrzeugs an der Arbeitsstelle mit leerer Batterie kann verhindert werden. Ein sicheres Erreichen der Ladestation nach der Arbeit ist gewährleistet.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung eines Elektrofahrzeugs in Form einer Baumaschine mit einem Batteriesystem und
- Figur 2: eine schematische Darstellung eines Batteriesystems des Elektrofahrzeugs mit einer Schalteinheit und Verbrauchersträngen.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

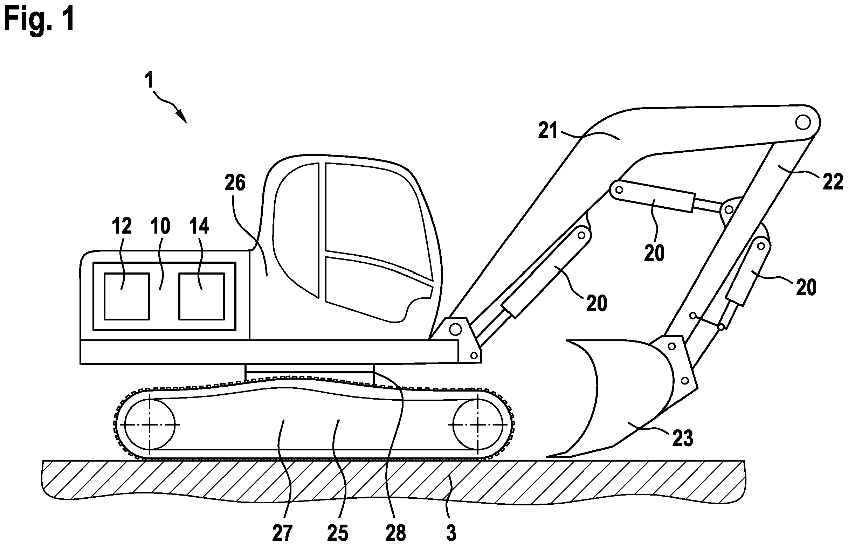

Figur 1 zeigt eine schematische Darstellung eines Elektrofahrzeugs 1 in Form einer Baumaschine. Bei der Baumaschine handelt es sich vorliegend um einen Bagger. Das Batteriesystem 10 umfasst eine Hochenergiebatterie 12 mit mehreren Hochenergiezellen und eine Hochleistungsbatterie 14 mit mehreren Hochleistungszellen. Die Hochenergiezellen sind innerhalb der Hochenergiebatterie 12 seriell und/oder parallel miteinander verschaltet. Die Hochenergiebatterie 12 weist vorliegend eine Ausgangsspannung im Bereich von 400 V bis 800 V auf. Die Hochleistungszellen sind innerhalb der Hochleistungsbatterie 14 seriell und/oder parallel miteinander verschaltet. Die Hochleistungsbatterie 14 weist vorliegend ebenfalls eine Ausgangsspannung im Bereich von 400 V bis 800 V auf.

Die Hochenergiezellen der Hochenergiebatterie 12 sind vorliegend als Lithium-lonen-Batteriezellen ausgeführt und weisen somit eine verhältnismäßig große Speicherkapazität auf und können eine verhältnismäßig große Energiemenge speichern. Die Hochleistungszellen der Hochleistungsbatterie 14 sind vorliegend als Superkondensatoren ausgeführt und können somit eine verhältnismäßig große Leistung, insbesondere in Form eines hohen Stromes, abgeben. Insbesondere können die Hochleistungszellen auch bei tiefen Temperaturen von unter 0 °C betrieben werden.

Das Elektrofahrzeug 1 umfasst einen Unterwagen 27 und einen Oberwagen 26, welche durch einen Drehkranz 28 miteinander verbunden sind. Der Drehkranz 28 ist von einem Elektromotor antreibbar. Durch Antreiben des Drehkranzes 28 dreht sich der Oberwagen 26 relativ zu dem Unterwagen 27. An dem Unterwagen 27 ist ferner ein Traktionselement in Form eines Kettenlaufwerks 25 vorgesehen, welches von einem Traktionsmotor 32 antreibbar ist. Durch Antreiben des Kettenlaufwerks 25 bewegt sich das Elektrofahrzeug 1 relativ zu einem Untergrund 3. Das Batteriesystem 10 liefert unter anderem elektrische Energie für den Elektromotor zum Antreiben des Drehkranzes 28 sowie für den Traktionsmotor 32 zum Antrieb des Kettenlaufwerks 25.

Das Elektrofahrzeug 1 umfasst ferner mehrere Stellelemente, insbesondere einen Ausleger 21, einen Löffelstiel 22 und einen Löffel 23. Die Stellelemente sind jeweils mittels eines Hydraulikzylinders 20 eines hydraulischen Systems antreibbar. Mittels einer Hydraulikpumpe, welche ebenfalls ein Stellelement des Elektrofahrzeugs 1 darstellt, ist ein erforderlicher Betriebsdrucks in dem hydraulischen System des Elektrofahrzeugs 1 einstellbar. Das Batteriesystem 10 liefert auch elektrische Energie für einen Stellmotor 31 zum Antrieb der Hydraulikpumpe des Elektrofahrzeugs 1.

Es ist auch denkbar, dass das als Arbeitsmaschine ausgebildete Elektrofahrzeug 1 kein hydraulisches System aufweist. Beispielsweise kann das Elektrofahrzeug 1 vollständig elektrisch betrieben werden. In diesem Fall sind die Stellelemente des Elektrofahrzeugs 1 mittels Elektromotoren antreibbar. Das Batteriesystem 10 liefert in diesem Fall elektrische Energie für die Elektromotoren zum Antrieb der besagten Stellelemente.

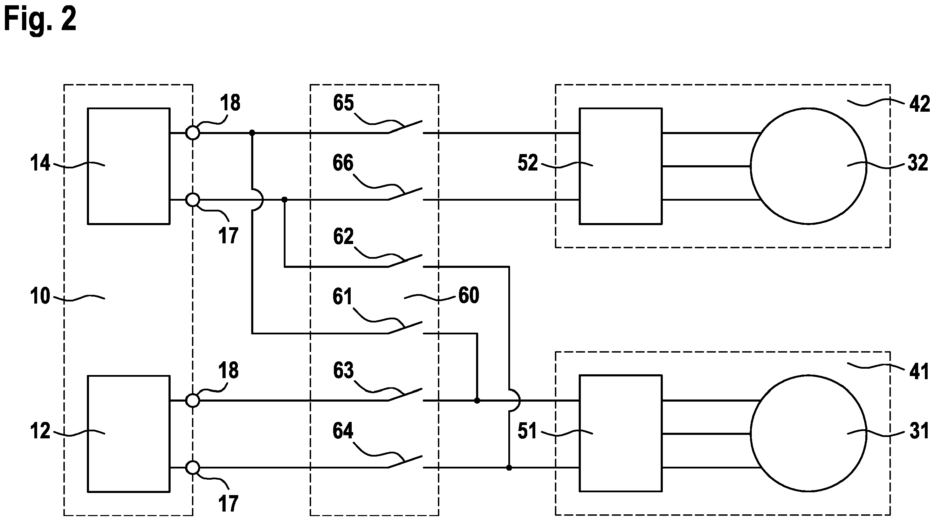

Figur 2 zeigt eine schematische Darstellung des Batteriesystems 10 des Elektrofahrzeugs 1 mit einer Schalteinheit 60 und mit zwei Verbrauchersträngen 41, 42. Das Batteriesystem 10 umfasst, wie bereits erwähnt, die Hochenergiebatterie 12 und die Hochleistungsbatterie 14. Die Hochenergiebatterie 12 und die Hochleistungsbatterie 14 weisen jeweils einen negativen Pol 17 und einen positiven Pol 18 auf. Das Batteriesystem 10 ist mittels der Schalteinheit 60 unter anderem mit einem ersten Verbraucherstrang 41 und mit einem zweiten Verbraucherstrang 42 elektrisch verbindbar.

Der erste Verbraucherstrang 41 umfasst den Stellmotor 31 zum Antrieb der Hydraulikpumpe des hydraulischen Systems sowie eine erste Leistungselektronik 51. Die erste Leistungselektronik 51 ist vorliegend als Wechselrichter, beziehungsweise als Inverter, ausgestaltet. Mittels der ersten Leistungselektronik 51 ist der vorliegend dreiphasige Stellmotor 31 ansteuerbar.

Der zweite Verbraucherstrang 42 umfasst den Traktionsmotor 32 zum Antrieb des Kettenlaufwerks 25 sowie eine zweite Leistungselektronik 52. Die zweite Leistungselektronik 52 ist vorliegend als Wechselrichter, beziehungsweise als Inverter, ausgestaltet. Mittels der zweiten Leistungselektronik 52 ist der vorliegend dreiphasige Traktionsmotor 32 ansteuerbar.

Die Hochenergiebatterie 12 ist mittels der Schalteinheit 60 mit der ersten Leistungselektronik 51 elektrisch verbindbar. Die Hochleistungsbatterie 14 ist mittels der Schalteinheit 60 mit der ersten Leistungselektronik 51 und mit der zweiten Leistungselektronik 52 elektrisch verbindbar. Die Hochenergiebatterie 12 weist eine verhältnismäßig große Speicherkapazität auf, und die Hochleistungsbatterie 14 kann eine verhältnismäßig große Leistung, insbesondere in Form eines hohen Stromes, abgeben.

Die Schalteinheit 60 umfasst vorliegend einen ersten Schalter 61, einen zweiten Schalter 62, einen dritten Schalter 63, einen vierten Schalter 64, einen fünften Schalter 65 und einen sechsten Schalter 66. Mittels des ersten Schalters 61 ist der positive Pol 18 der Hochleistungsbatterie 14 mit dem ersten Verbraucherstrang 41 elektrisch verbindbar. Mittels des zweiten Schalters 62 ist der negative Pol 17 der Hochleistungsbatterie 14 mit dem ersten Verbraucherstrang 41 elektrisch verbindbar. Mittels des dritten Schalters 63 ist der positive Pol 18 der Hochenergiebatterie 12 mit dem ersten Verbraucherstrang 41 elektrisch verbindbar. Mittels des vierten Schalters 64 ist der negative Pol 17 der Hochenergiebatterie 12 mit dem ersten Verbraucherstrang 41 elektrisch verbindbar. Mittels des fünften Schalters 65 ist der positive Pol 18 der Hochleistungsbatterie 14 mit dem zweiten Verbraucherstrang 42 elektrisch verbindbar. Mittels des sechsten Schalters 66 ist der negative Pol 17 der Hochleistungsbatterie 14 mit dem zweiten Verbraucherstrang 42 elektrisch verbindbar.

Der fünfte Schalter 65 und der sechste Schalter 66 können auch entfallen. In diesem Fall sind die Pole 17, 18 der Hochleistungsbatterie 14 ständig mit dem zweiten Verbraucherstrang 42 verbunden. Ebenso können der zweite Schalter 62, der vierte Schalter 64 und der sechste Schalter 66 entfallen. In diesem Fall sind die negativen Pole 17 der Hochenergiebatterie 12 und der Hochleistungsbatterie 14 ständig miteinander und mit den Verbrauchersträngen 41, 42 verbunden.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Elektrofahrzeug (1), insbesondere Baumaschine, umfassend
ein Batteriesystem (10), welches
eine Hochenergiebatterie (12) mit mindestens einer Hochenergiezelle und eine Hochleistungsbatterie (14) mit mindestens einer Hochleistungszelle aufweist,
einen ersten Verbraucherstrang (41), welcher mindestens einen Stellmotor (31) zum Antrieb mindestens eines Stellelements des Elektrofahrzeugs (1) aufweist,
einen zweiten Verbraucherstrang (42), welcher mindestens einen Traktionsmotor (32) zum Antrieb mindestens eines Traktionselements des Elektrofahrzeugs (1) aufweist, und
eine Schalteinheit (60), welche derart ansteuerbar ist, dass
die Hochleistungsbatterie (14) mit dem zweiten Verbraucherstrang (42) elektrisch verbunden ist, sowie dass
die Hochleistungsbatterie (14) mit dem ersten Verbraucherstrang (41) elektrisch verbunden ist, sowie dass
die Hochenergiebatterie (12) mit dem ersten Verbraucherstrang (41) elektrisch verbunden ist.

2. Elektrofahrzeug (1) nach Anspruch 1, wobei die mindestens eine Hochenergiezelle der Hochenergiebatterie (12) als Lithium-Ionen-Batteriezelle ausgeführt ist.

3. Elektrofahrzeug (1) nach einem der vorstehenden Ansprüche, wobei die mindestens eine Hochleistungszelle der Hochleistungsbatterie (14) als Superkondensator oder als hybrider Superkondensator ausgeführt ist.

4. Elektrofahrzeug (1) nach einem der vorstehenden Ansprüche, wobei die Hochenergiebatterie (12) und die Hochleistungsbatterie (14) derart angeordnet sind, dass Wärme, die bei einem Betrieb der Hochleistungsbatterie (14) entsteht, zu der Hochenergiebatterie (12) übertragbar ist.

5. Elektrofahrzeug (1) nach einem der vorstehenden Ansprüche, wobei mindestens ein Heizwiderstand zum Beheizen der Hochenergiebatterie (12) vorgesehen ist, welcher von der Hochleistungsbatterie (14) ansteuerbar ist.

6. Verfahren zum Betrieb eines Elektrofahrzeugs (1) nach einem der vorstehenden Ansprüche, wobei
die Hochenergiebatterie (12) von dem ersten Verbraucherstrang (41) elektrisch getrennt wird, solange eine Temperatur der Hochenergiebatterie (12) einen vorgegebenen Grenzwert unterschreitet.

7. Verfahren nach Anspruch 6, wobei
die Hochleistungsbatterie (14) mit dem ersten Verbraucherstrang (41) elektrisch verbunden wird, solange die Temperatur der Hochenergiebatterie (12) den vorgegebenen Grenzwert unterschreitet.

8. Verfahren nach einem der Ansprüche 6 bis 7, wobei
die Hochenergiebatterie (12) mittels mindestens eines Heizwiderstands beheizt wird, solange die Temperatur der Hochenergiebatterie (12) den vorgegebenen Grenzwert unterschreitet.

9. Verfahren nach einem der Ansprüche 6 bis 8, wobei
die Hochenergiebatterie (12) von dem ersten Verbraucherstrang (41) elektrisch getrennt wird, wenn ein Ladezustand der Hochenergiebatterie (12) einen vorgegebenen Schwellenwert unterschreitet.

10. Verfahren nach Anspruch 9, wobei
die Hochleistungsbatterie (14) mit dem ersten Verbraucherstrang (41) elektrisch verbunden wird, wenn der Ladezustand der Hochenergiebatterie (12) den vorgegebenen Schwellenwert unterschreitet.

## Claims

1. Electric vehicle (1), in particular construction machine, comprising
a battery system (10) which
has a high-energy battery (12) having at least one high-energy cell and a high-performance battery (14) having at least one high-performance cell,
a first load string (41), which has at least one actuating motor (31) for driving at least one actuating element of the electric vehicle (1),
a second load string (42), which has at least one traction motor (32) for driving at least one traction element of the electric vehicle (1), and
a switching unit (60) which can be actuated in such a way that
the high-performance battery (14) is electrically connected to the second load string (42), and that the high-performance battery (14) is electrically connected to the first load string (41), and that the high-energy battery (12) is electrically connected to the first load string (41).

2. Electric vehicle (1) according to Claim 1, wherein the at least one high-energy cell of the high-energy battery (12) is embodied as a lithium-ion battery cell.

3. Electric vehicle (1) according to either of the preceding claims, wherein
the at least one high-performance cell of the high-performance battery (14) is embodied as a supercapacitor or as a hybrid supercapacitor.

4. Electric vehicle (1) according to one of the preceding claims, wherein
the high-energy battery (12) and the high-performance battery (14) are arranged in such a way that heat which is generated during operation of the high-performance battery (14) can be transferred to the high-energy battery (12).

5. Electric vehicle (1) according to one of the preceding claims, wherein
at least one heating resistor is provided for heating the high-energy battery (12), which heating resistor can be actuated by the high-performance battery (14).

6. Method for operating an electric vehicle (1) according to one of the preceding claims, wherein
the high-energy battery (12) is electrically isolated from the first load string (41) as long as a temperature of the high-energy battery (12) undershoots a prespecified limit value.

7. Method according to Claim 6, wherein
the high-performance battery (14) is electrically connected to the first load string (41) as long as the temperature of the high-energy battery (12) undershoots the prespecified limit value.

8. Method according to either of Claims 6 and 7, wherein
the high-energy battery (12) is heated by means of at least one heating resistor as long as the temperature of the high-energy battery (12) undershoots the prespecified limit value.

9. Method according to one of Claims 6 to 8, wherein the high-energy battery (12) is electrically isolated from the first load string (41) when a state of charge of the high-energy battery (12) undershoots a prespecified threshold value.

10. Method according to Claim 9, wherein
the high-performance battery (14) is electrically connected to the first load string (41) when the state of charge of the high-energy battery (12) undershoots the prespecified threshold value.

## Revendications

1. Véhicule électrique (1), en particulier machine de construction, comprenant
un système de batterie (10) qui présente une batterie à haute énergie (12) pourvue d'au moins un élément à haute énergie, et une batterie haute performance (14) pourvue d'au moins un élément haute performance,
une première branche de consommateur (41) qui présente au moins un moteur de réglage (31) pour entraîner au moins un élément de réglage du véhicule électrique (1),
une deuxième branche de consommateur (42) qui présente au moins un moteur de traction (32) pour entraîner au moins un élément de traction du véhicule électrique (1), et
une unité de commutation (60) qui peut être pilotée de telle sorte
que la batterie haute performance (14) est reliée électriquement à la deuxième branche de consommateur (42), et
que la batterie haute performance (14) est reliée électriquement à la première branche de consommateur (41), et \
que la batterie à haute énergie (12) est reliée électriquement à la première branche de consommateur (41) .

2. Véhicule électrique (1) selon la revendication 1, dans lequel ledit au moins un élément à haute énergie de la batterie à haute énergie (12) est réalisé sous la forme d'un élément de batterie lithium-ion.

3. Véhicule électrique (1) selon l'une quelconque des revendications précédentes, dans lequel ledit au moins un élément haute performance de la batterie haute performance (14) est réalisé sous la forme d'un supercondensateur ou d'un supercondensateur hybride.

4. Véhicule électrique (1) selon l'une quelconque des revendications précédentes, dans lequel la batterie à haute énergie (12) et la batterie haute performance (14) sont disposées de telle sorte que la chaleur qui est créée lors du fonctionnement de la batterie haute performance (14) peut être transmise à la batterie à haute énergie (12).

5. Véhicule électrique (1) selon l'une quelconque des revendications précédentes, dans lequel au moins une résistance de chauffage est prévue pour chauffer la batterie à haute énergie (12) et qui peut être pilotée par la batterie haute performance (14).

6. Procédé permettant de faire fonctionner un véhicule électrique (1) selon l'une quelconque des revendications précédentes, dans lequel la batterie à haute énergie (12) est électriquement séparée de la première branche de consommateur (41) tant qu'une température de la batterie à haute énergie (12) est inférieure à une valeur limite prédéfinie.

7. Procédé selon la revendication 6, dans lequel la batterie haute performance (14) est reliée électriquement à la première branche de consommateur (41) tant que la température de la batterie à haute énergie (12) est inférieure à la valeur limite prédéfinie.

8. Procédé selon l'une quelconque des revendications 6 à 7, dans lequel la batterie à haute énergie (12) est chauffée au moyen d'au moins une résistance de chauffage tant que la température de la batterie à haute énergie (12) est inférieure à la valeur limite.

9. Procédé selon l'une quelconque des revendications 6 à 8, dans lequel la batterie à haute énergie (12) est séparée électriquement de la première branche de consommateur (41) si un état de charge de la batterie à haute énergie (12) est inférieur à une valeur seuil prédéfinie.

10. Procédé selon la revendication 9, dans lequel la batterie haute performance (14) est reliée électriquement à la première branche de consommateur (41) si l'état de charge de la batterie à haute énergie (12) est inférieur à la valeur seuil prédéfinie.
